# EUROPÄISCHE PATENTSCHRIFT

(11) **EP 1 306 940 B1**
(45) Veröffentlichungstag und Bekanntmachung des Hinweises auf die Patenterteilung: **15.09.2004**
(21) Anmeldenummer: 02013553.9
(22) Anmeldetag: 19.06.2002
(51) Int. Cl.: H01S 3/094, H01S 3/06

(54) **Anordnung zum Pumpen eines anisotropen Laserkristalls**
Arrangement for pumping an anisotropic laser crystal
Dispositif de pompage pour un cristal laser anisotrope

(30) Priorität: 26.10.2001 DE 10154007
(43) Veröffentlichungstag der Anmeldung: 02.05.2003
(73) Patentinhaber: JENOPTIK Laser, Optik, Systeme GmbH, 07745 Jena (DE)
(72) Erfinder: Braun, Bernd, Dr., 07743 Jena (DE); Hollemann, Günter, Dr., 07749 Jena (DE)
(74) Vertreter: Bertram, Helmut

(56) Entgegenhaltungen:
- WO-A-00/77893
- US-A- 5 561 547
- US-A- 5 748 664
- US-A- 5 907 570
- US-A1- 2001 028 671
- KOPT D ET AL: "1.1-W CW CR:LISAF LASER PUMPED BY A 1-CM DIODE ARRAY" OPTICS LETTERS, OPTICAL SOCIETY OF AMERICA, WASHINGTON, US, Bd. 22, Nr. 2, 15. Januar 1997 (1997-01-15), Seiten 99-101, XP000679188 ISSN: 0146-9592
- CHEN Y F ET AL: "EFFICIENT HIGH-POWER DIODE-END-PUMPED TEM00 ND:YVO4 LASER" IEEE PHOTONICS TECHNOLOGY LETTERS, IEEE INC. NEW YORK, US, Bd. 11, Nr. 10, Oktober 1999 (1999-10), Seiten 1241-1243, XP000880905 ISSN: 1041-1135
- KOPF D ET AL: "400-MW CONTINUOUS-WAVE DIODE-PUMPED CR:LISAF LASER BASED ON A POWER-SC" OPTICS LETTERS, OPTICAL SOCIETY OF AMERICA, WASHINGTON, US, Bd. 20, Nr. 17, 1. September 1995 (1995-09-01), Seiten 1782-1784, XP000520898 ISSN: 0146-9592
- EGGLESTON J M ET AL: "THE SLAB GEOMETRY LASER - PART I: THEORY" IEEE JOURNAL OF QUANTUM ELECTRONICS, IEEE INC. NEW YORK, US, Bd. QE-20, Nr. 3, 1. März 1984 (1984-03-01), Seiten 289-301, XP000705622 ISSN: 0018-9197

## Beschreibung

Die Erfindung betrifft eine Anordnung zum Pumpen eines anisotropen Laserkristalls mit einem asymmetrischen Pumpstrahl, dessen Pumpstrahlquerschnitt senkrecht zueinander unterschiedliche Ausdehnungen aufweist, und mit einem an diese Asymmetrie angepassten Laserstrahlquerschnitt.

Soll ein Festkörperlaserkristall in einem Laserresonator mit Hilfe von Diodenlasern gepumpt werden, ist es zur Erzeugung einer beugungsbegrenzten Strahlqualität erforderlich, die Ausdehnung des Laserstrahls an die Ausdehnung des Pumplaserstrahls innerhalb des Pumpvolumens anzupassen. Außerdem benötigen Festkörperlaser für eine hohe Effizienz eine hohe Pumpleistungsdichte, die jedoch häufig durch die geringe Festigkeit des Laserkristalls begrenzt ist, da dieser schon bei niedrigen Pumpleistungsdichten Rissbildungen aufweist und somit zerstört werden kann. Dies betrifft insbesondere Neodymdotierte Yttriumorthovanadat-Kristalle (Nd:YVO₄), die im Vergleich zu Nd:YAG ein wesentlich geringeres Elastizitätsmodul besitzen.

Bekanntermaßen weisen Diodenlaser in zueinander senkrechten Richtungen sehr verschiedene Strahleigenschaften auf, mit denen beim Pumpen eines Festkörperlasers unterschiedlich umgegangen wird. Entweder wird der Pumpstrahl mit Verlusten an den Resonatorstrahl aufwändig und kostenintensiv angepasst oder es wird ein Konzept gewählt, das die in Richtung der Fast-axis und der Slow-axis unterschiedlichen Strahleigenschaften des Diodenlasers belässt und dafür den Resonatorstrahl an den stark asymmetrischen Pumpstrahl anpasst.

Zur Anwendung des ersten Konzeptes ist es bekannt, aus dem stark asymmetrischen Strahlquerschnitt des Diodenlasers mittels astigmatischer Abbildungsoptiken im Fokus des Pumpstrahls einen runden Strahlquerschnitt zu formen. Der Nachteil einer solchen Anordnung besteht darin, dass die Fokussierbarkeit des Diodenlasers vom Strahlparameterprodukt in Richtung der Slow-axis begrenzt ist und die bessere Fokussierbarkeit in Richtung der Fast-axis "verschenkt" wird.

Eine höhere Leuchtdichte wird erreicht, wenn die einzelnen Emitter in Fasern eingekoppelt und die Fasern zu einem Faserbündel zusammengefasst werden, da sich auf diese Weise die Strahlparameterprodukte mitteln und die abstrahlende Fläche nicht mehr den Abstand der Emitter zueinander enthält (US 5 127 068).
Mit der aufwändigen, teuren und verlustbehafteten Einkopplung jedes einzelnen Emitters in eine Faser verringert sich jedoch der Absorptionswirkungsgrad beim Pumpen anisotroper Kristalle, da in den Fasern eine Depolarisation der Pumpstrahlung erfolgt.

Bei einer weiteren bekannten Lösung kann die Strahlung der einzelnen Emitter mit Hilfe von Treppenspiegeln (WO 96/13884) umgeordnet werden, so dass sich in senkrecht zueinander verlaufenden Richtungen ein Mittelwert der ursprünglichen Strahlparameterprodukte ergibt. Zumeist wird dieses Konzept in Verbindung mit einer Faserkopplung verwendet, die zusätzlich eine Homogenisierung über den Strahlquerschnitt bewirkt.
Wiederum bestehen die bereits genannten Probleme, wobei Verluste bis zu 40% im Vergleich zu einem Diodenlaser ohne Anpassungsmittel auftreten.

Derartige Verluste auf Kosten einer Strahlsymmetrisierung sind bei dem zweiten genannten Konzept nicht zu finden, doch sind zur Anpassung des Laserstrahls an den Pumpstrahl zusätzliche optische Elemente im Resonator erforderlich.
So ist aus der US 5 103 457 aber auch aus D. C. Shannon and R. W. Wallace, "High-power Nd:YAG laser end pumped by a cw, 10 mm x 1 µm aperture, 10-W laser-diode bar," Optics Letters, vol. 16, pp. 318-320, 1991] der Einsatz von anamorphotischen Prismen bekannt.
Zylinderspiegel dagegen verwenden V. N. Bykov et al., "Cylindrical resonator with an internal astigmatic medium," Soviet Journal of Quantum Electronics, vol. 14, pp. 483-486, 1984; F. Krausz, J. Zehetner, T. Brabec, E. Wintner, "Elliptic-mode cavity for diode-pumped lasers," Optics Letters, vol. 16, pp. 1496-1498, 1991; und D. Kopf et al., "400 mW continous-wave diode-pumped Cr:LiSAF laser based on a power scalable concept," Optics Letters, vol. 20, pp. 1782-1784, 1995. Im Extremfall kann das Achsverhältnis unter Zuhilfenahme von Zylinderspiegeln 1:10 und mehr betragen [WO 00/77893 und D. Kopf et al., "1.1 W cw Cr:LiSAF laser pumped by a 1-cm diode array," Optics Letters, vol. 22, pp. 99-101, 1997].

Bei dem zweiten Konzept bleibt zwar die Leuchtdichte des Diodenlasers erhalten, doch wirken sich die benötigten resonatorinternen astigmatischen oder anamorphotischen Elemente prozessstörend aus. Außerdem erschwert die starke Fokussierung in Richtung der Fast-axis das Handling des besonders gegenüber Verkippungen empfindlichen Resonators.

Ohne weitere astigmatische Elemente im Resonator kommt die US 5 561 547 aus, die den Elliptizitätsgrad der durch Pumpen induzierten thermischen Linse in einem anisotropen Laserkristall, wie einem Nd:YVO₄-Kristall, kontrolliert. Der Laserkristall wird mit einem runden Pumpstrahl eines fasergekoppelten Diodenlasers endgepumpt und an gegenüberliegenden Flächen, welche senkrecht zur C-Achse des Kristalls verlaufen, gehalten und gekühlt, während gegenüberliegende Flächen, die senkrecht zur A-Achse verlaufen, thermisch isoliert sind. Da die Wärmesenkentechnik die thermische Linse in dem anisotropen Nd:YVO₄-Kristall kreisförmig ausbildet, wird ein im Wesentlichen runder Austrittsstrahl erzeugt.
Der Nachteil dieser Lösung besteht darin, dass wiederum aufwändige Strahlformungstechniken notwendig sind, um einen runden Pumpstrahl zu erzeugen.

US 5 748 664 beschreibt einen Nd:LYF Laser mit der C-Achse senkrecht zu dem Pumpstrahl.

Aufgabe der Erfindung ist es, den Einfluss der Zerstörungsgrenze des Laserkristalls auf die Erhöhung der Pumpleistungsdichte zu mindern und eine damit verbundene Verbesserung der Strahlqualität und Erhöhung der Effizienz eines diodengepumpten Festkörperlasers zu erreichen. Dabei soll das Pumpvolumen bzw. die Querschnittsfläche über eine Länge des Kristalls, die der Absorptionslänge zumindest annähernd entspricht, möglichst gering gehalten werden.

Gemäß der Erfindung wird die Aufgabe durch eine Anordnung der eingangs genannten Art dadurch gelöst, dass von den kristallographischen Achsen des anisotropen Laserkristalls diejenige Achse, in deren Richtung der höchste Wert der Kristallbruchgrenze vorliegt, entlang des größten, in Richtung der geringeren Ausdehnung des Pumpstrahlquerschnitts gelegten Temperaturgradienten ausgerichtet ist.
In dem anisotropen Laserkristall, der einen von dem Pumpstrahl durchsetzten Kristallquerschnitt mit paarweise parallel gegenüberliegenden Kristallkanten von zumindest in einem Teilabschnitt des Laserkristalls unterschiedlicher Kantenlänge enthält, wird ein gerichteter Wärmefluss erzeugt, indem der anisotrope Laserkristall seinen größten Wärmekoeffizienten in Richtung der geringeren Ausdehnung des Pumpstrahlquerschnitts und parallel zur Kristallkante mit der geringeren Kantenlänge aufweist.

Unter teilweiser Beibehaltung einer definierten Asymmetrie des Pumpstrahls zum Erreichen einer hohen Pumpleistungsdichte werden zur Anpassung des Laserstrahls an diese Asymmetrie gegenüber dem Stand der Technik völlig abweichende Orientierungsmaßnahmen ausgenutzt. Die durch die Reduzierung der Kristallabmessungen in Richtung der geringeren Ausdehnung des Pumpstrahlquerschnittes hervorgerufene Asymmetrie des Wärmeflusses und die daraus resultierende Asymmetrie der thermischen Linse kann derart an den Resonator angepasst werden, dass im Inneren des Kristalles ein asymmetrischer Lasermode realisiert wird, der an den asymmetrischen Pumpmode angepasst ist, ohne dass weitere astigmatische Elemente im Resonator benötigt werden, d.h., ohne dass für die unterschiedlichen Achsen unterschiedliche Strahlformungsmittel eingesetzt werden müssen.

Es konnte außerdem gefunden werden, dass mit den Orientierungsmaßnahmen und der Ausbildung des Laserkristalls besonders günstige thermoelastische Eigenschaften in Form von verbesserten Bruchfestigkeitseigenschaften verbunden sind, wodurch der Laserkristall zur Aufnahme höherer Pumpleistungsdichten im Vergleich zu bekannten Pumpanordnungen angepasst werden kann. Außerdem sind wesentlich verbesserte Temperaturverhältnisse in der Kristallmitte des anisotropen Laserkristalls zu erreichen. Besonders die Reduzierung der dortigen maximalen Temperatur wirkt sich infolge einer geringeren thermischen Belastung positiv auf eine Erhöhung der Effizienz des Laserüberganges aus.

Die asymmetrische thermische Linse wird dazu benutzt, im Inneren des Laserkristalls einen elliptischen Laserstrahlquerschnitt zu erzeugen, dessen Achsverhältnis größer 1 : 1 und kleiner 1 : 3 ist. Mit Hilfe einer brewstergeschnittenen Strahlaustrittsfläche des Laserkristalls kann dieses Achsverhältnis noch um den Faktor des Verhältnisses des Brechungsindex des Laserkristalls zum Brechnungsindex der Luft vergrößert werden.

Wird als anisotroper Kristall ein Nd:YVO₄-Kristall verwendet, so ist dieser bei Anwendung der Erfindung so auszurichten, dass die a-Achse in Richtung der geringeren Ausdehnung des Pumpstrahlquerschnitts (parallel zur Fast-axis) und die c-Achse in Richtung der größeren Ausdehnung des Pumpstrahlquerschnitts (parallel zur Slow-axis) verläuft.

Im Gegensatz zu der bevorzugten Wärmesenkentechnik und der Optimierung des Kristallquerschnittes gemäß der US 5 561 547 wird ein hauptsächlich parallel zur c-Achse gerichteter Wärmefluss zur Erzeugung homogener thermischer Eigenschaften vermieden. Statt dessen wird durch den Verzicht auf die runde thermische Linse bzw. den radialsymmetrischen Resonatorstrahl im Kristall eine höhere Freiheit bei der Einstellung von Parametern, wie der Kristallorientierung und -geometrie erreicht. Anisotrope Kristalleigenschaften werden nicht kompensiert, sondern bei einem brewstergeschnittenen Laserkristall, dessen Abmessung in Richtung der geringeren Ausdehnung des Pumpstrahls gegenüber derjenigen in dazu senkrechter Richtung reduziert ist, erfindungsgemäß zur Erfüllung der gestellten Aufgabe eingesetzt

Vorteilhafterweise kann zur Erzeugung des asymmetrischen Pumpstrahls ein Diodenlaser mit zeilenförmig angeordneten Einzelemittern und Fast- und Slow-axis-Kollimatoren dienen, wobei der Slow-axis-Kollimator aus Einzellinsen besteht, die in einer Ebene der Strahlüberschneidung der von den Einzelemittern ausgesendeten Strahlenbündel angeordnet sind.

Die auftretende Asymmetrie des Ausgangsstrahles kann durch geeignetes Design des Resonators auf weniger als 10% begrenzt und/oder durch Off-axis-Reflexion an einem gekrümmten Spiegel gänzlich ausgeglichen werden.

Die Erfindung soll nachstehend anhand der schematischen Zeichnung näher erläutert werden. Es zeigen:
- Fig. 1: eine Pumpanordnung gemäß der Erfindung in einer Draufsicht
- Fig. 2: die Achsenorientierung im Laserkristall
- Fig. 3: den Modenquerschnitt in einem Laserkristall in einer Draufsicht
- Fig. 4: den Modenquerschnitt in einem Laserkristall in einer Seitenansicht
- Fig. 5: den Verlauf von Temperatur und v. Mises-Vergleichsspannungen in Abhängigkeit von der Kristallhöhe
- Fig. 6: eine Resonatorkonfiguration für einen cw-Laserbetrieb oder einen gütegeschalteten Laserbetrieb mit Impulsen unterhalb von 300 ns
- Fig. 7: eine Resonatorkonfiguration für einen modengekoppelten Laserbetrieb unterhalb 10 ps oder einen gütegeschalteten Laserbetrieb mit Impulsen oberhalb von 300 ns

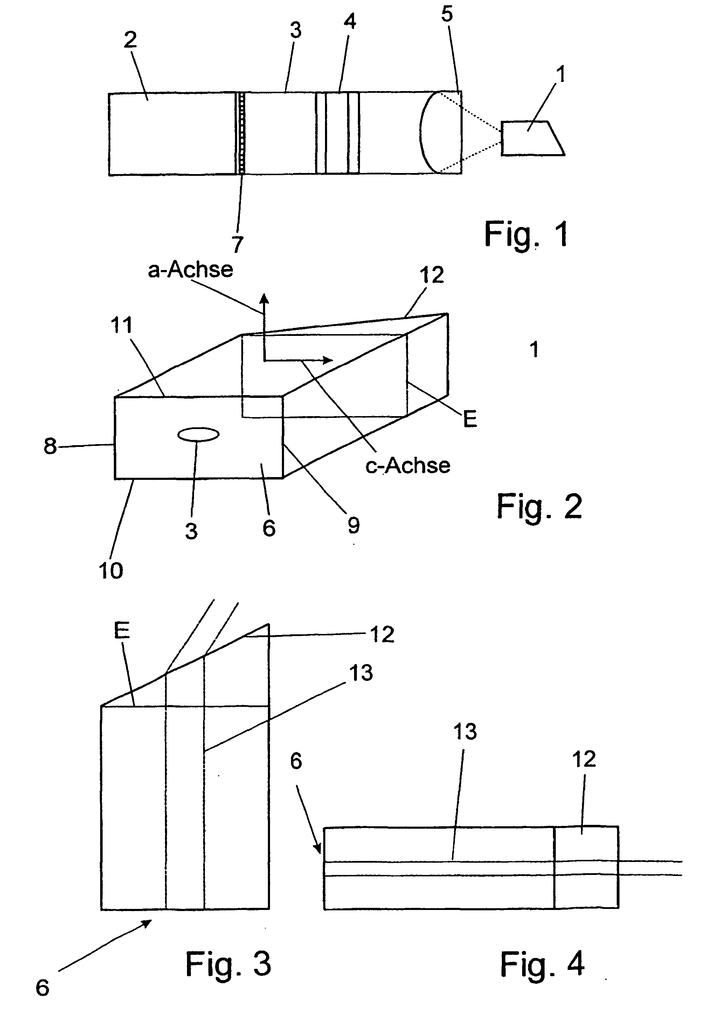

Die in Fig. 1 dargestellte Pumpanordnung enthält zum Endpumpen eines Laserkristalls 1 eine Pumpstrahlungsquelle 2 in Form eines Laserdiodenbarrens oder einer Anordnung davon, deren Pumpstrahl 3 mittels zweier Zylinderlinsen 4 und 5 fokussiert auf eine Strahleintrittsfläche 6 des Laserkristalls 1 gerichtet ist. Der Pumpstrahl 3 weist beim Eintritt in den Laserkristall 1 eine Asymmetrie seines Querschnittes mit senkrecht zueinander unterschiedlichen Ausdehnungen auf.

Zum Erreichen einer hohen Pumpstrahldichte hat es sich zur Verbesserung der Strahleigenschaften des Laserdiodenbarrens vorteilhaft erwiesen, zusätzlich zur Kollimation der Fast-Axis auch die Slow-Axis in besonderer Weise zu kollimieren. Die in dem Laserdiodenbarren zeilenförmig angeordneten Einzelemitter beanspruchen üblicherweise nur einen Teil des zur Verfügung stehenden Platzes. Der andere Teil wird von Zwischenräumen, den sogenannten "spacings" eingenommen, die das Strahlparameterprodukt verschlechtern, da sich die abstrahlende Fläche um den nicht ausgenutzten Platz des Zwischenraumes vergrößert. Eine Anordnung von Kollimationslinsen in der Ebene der Überschneidung der Laserstrahlenbündel eliminiert das Todverhältnis, wodurch eine Verbesserung des Strahlparameterprodukts etwa um den Faktor 2 erreicht werden kann. Die dafür vorgesehene Mikrooptik 7 ist der Pumpstrahlungsquelle 2 zu diesem Zweck nachgeordnet.

Alternativ zur Verwendung von Zylinderoptiken ist es möglich, die Restdivergenz der Fast-axis bewußt zu vergrößern und anschließend mit einer asphärischen Linse zu fokussieren. Der Vorteil besteht darin, dass die asphärische Abbildung in Richtung der Slow-axis eine bessere Kollimation zulässt, hat jedoch den Nachteil, dass die Foki der Fast- und Slow-axis an unterschiedlichen Positionen in dem Laserkristall 1 liegen.

Der anisotrope Laserkristall 1, für den im vorliegenden Beispiel ein Nd:YVO₄-Kristall von 4 x 2 x 6,9 mm³ Größe verwendet wird, ist gemäß Fig. 2 derart zum Pumpstrahl orientiert, dass seine kristallographische c-Achse in Richtung der größeren Ausdehnung und die kristallographische a-Achse, in deren Richtung der höchste Wert der Kristallbruchgrenze und des Wärmeausbreitungskoeffizienten vorliegt, in Richtung der geringeren Ausdehnung des Pumpstrahlquerschnitts gerichtet sind.

Wird zusätzlich die Kristallhöhe in Richtung der a-Achse erniedrigt und somit der Temperaturgradient weiter vergrößert, so hat sich gezeigt, dass damit eine erhebliche Erhöhung der Kristallfestigkeit gegenüber einer thermischen Beanspruchung resultiert. Das bedeutet, dass der Laserkristall 1 bei wesentlich höheren Pumpleistungen und Pumpleistungsdichten betrieben werden kann.

Der Laserkristall 1 weist aus diesem Grund einen von dem Pumpstrahl 3 durchsetzten Kristallquerschnitt mit paarweise parallel gegenüberliegenden Kristallkanten 8, 9, 10 und 11 von unterschiedlicher Kantenlänge auf, wobei die Kristallkanten 8 und 9, die gegenüber den Kristallkanten 10 und 11 eine geringere Kantenlänge aufweisen, in Richtung der geringeren Ausdehnung des Pumpstrahlquerschnitts verlaufen.
Das bevorzugte Kantenverhältnis liegt in einem brewstergeschnittenen Laserkristall selbstverständlich nur in einem Teilabschnitt vor, der bei der Strahleintrittsfläche 6 beginnt und bei einer Ebene E endet, nach der die als Strahlaustrittsfläche dienende, gegen den Resonatorstrahl geneigte Brewsterfläche 12 die Querschnittsfläche verringert und damit auch das Kantenverhältnis verändert.
Bei einem verwendeten Pumpstrahlquerschnitt von 940 x 330 µm² konnte eine in Wärme umgewandelte Pumpleistung von 8 W und eine gemessene thermische Linse von fₓ = 600 mm in der horizontalen Richtung und f_{y} = 200 mm in der vertikalen Richtung erreicht werden.

Den mit Hilfe der asymmetrischen thermische Linse und durch den Brewsterschnitt des Laserkristalls 1 erzeugten elliptischen Modenquerschnitt des Laserstrahls 13 verdeutlichen die Ansichten in den Figuren 3 und 4. Insgesamt wird so ein Achsenverhältnis von 1 : 2 bis 1 : 3 eingestellt.

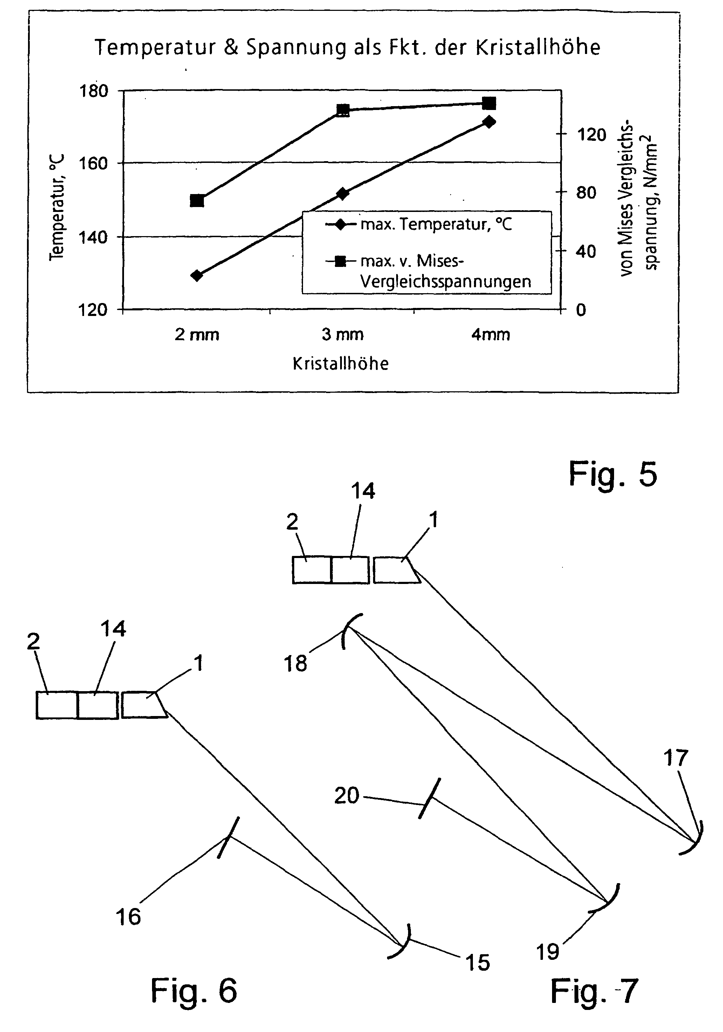

Der ermittelte Zusammenhang zwischen geringer werdender Kristallhöhe (Länge der Kristallkanten 8, 9) einerseits und den maximalen Temperaturen sowie den maximalen v. Mises-Vergleichspannungen im Laserkristall andererseits ist in Fig. 5 gezeigt. Letztere sind für das Reißen der Kristalle charakterisierend.

Bei der linearen Resonatorkonfiguration für einen cw-Laserbetrieb oder einen gütegeschalteten Laserbetrieb mit Impulsen unterhalb von 300 ns gemäß Fig. 6 ist dem mittels der Pumpstrahlungsquelle 2 über eine Pumpoptik 14 gepumpten Nd:YVO₄-Laserkristall 1 ein Umlenkspiegel 15 nachgeordnet und es wird über einen Endspiegel 16 ausgekoppelt. Zusätzliche asymmetrische Elemente innerhalb des Resonators sind vermieden worden. Die Ausbildung des Umlenkspiegels 15 als sphärischer Spiegel gestattet leichte Kompensationen (Feintuning) von Strahlasymmetrien durch Off-axis-Reflexionen.

Bei einem mit sättigbaren Halbleiterabsorbern arbeitenden modengekoppelten Resonator mit drei Umlenkspiegeln 17, 18 und 19 und einem Endspiegel 20 gemäß Fig. 7 bestehen verschiedene Möglichkeiten der Strahlauskopplung. So kann zwischen dem Laserkristall 1 und der Pumpoptik 14 z. B. ein dichroitischer Spiegel angeordnet werden. Weiterhin ist es möglich, mittels einer λ/2-Platte, einer λ/4-Platte und eines Polarisationsstrahlteilers die Polarisation des Resonatorstrahls 13 definiert zu verdrehen und den gedrehten Anteil in einer Richtung des Strahlenganges auszukoppeln. Auch können an einem Umlenkspiegel zwei Ausgangsstrahlen ausgekoppelt werden. Wird der Halbleiterabsorber als Umlenkspiegel eingesetzt, dann muss die veränderte Phasenlage der einzelnen Moden im Vergleich zum Ende des Resonators berücksichtigt werden.

## Patentansprüche

1. Anordnung zum Pumpen eines anisotropen Laserkristalls (1) mit einem asymmetrischen Pumpstrahl (3), dessen Pumpstrahlquerschnitt senkrecht zueinander unterschiedliche Ausdehnungen aufweist und mit einem an diese Asymmetrie angepassten Laserstrahlquerschnitt, **dadurch gekennzeichnet, dass** von den kristallographischen Achsen des anisotropen Laserkristalls diejenige Achse, in deren Richtung der höchste Wert der Kristallbruchgrenze vorliegt, entlang des größten, in Richtung der geringeren Ausdehnung des Pumpstrahlquerschnitts gelegten Temperaturgradienten ausgerichtet ist.

2. Anordnung nach Anspruch 1, **dadurch gekennzeichnet, dass** der anisotrope Laserkristall (1), der einen von dem Pumpstrahl (3) durchsetzten Kristallquerschnitt mit paarweise parallel gegenüberliegenden Kristallkanten von zumindest in einem Teilabschnitt des Laserkristalls unterschiedlicher Kantenlänge enthält, seinen größten Wärmeausbreitungskoeffizienten in Richtung der geringeren Ausdehnung des Pumpstrahlquerschnitts und parallel zur Kristallkante mit der geringeren Kantenlänge aufweist.

3. Anordnung nach Anspruch 2, **dadurch gekennzeichnet, dass** in dem Laserkristall (1) eine asymmetrische thermische Linse mit unterschiedlicher Stärke in senkrecht zueinander verlaufenden Richtungen ausgebildet ist, wobei die Stärke der thermischen Linse der Größe der Ausdehnung des Pumpstrahlquerschnitts angepasst ist.

4. Anordnung nach Anspruch 3, **dadurch gekennzeichnet, dass** durch die richtungsabhängigen Unterschiede in den Stärken der thermischen Linse in dem Laserkristall (1) ein Laserstrahlquerschnitt vorliegt, dessen Achsverhältnis in senkrecht zueinander verlaufenden Richtungen größer 1 : 1 und kleiner 1 : 3 ist.

5. Anordnung nach Anspruch 4, **dadurch gekennzeichnet, dass** der Laserkristall (1) als Strahlaustrittsfläche eine Brewsterfläche (12) aufweist und sich das Achsverhältnis um den Faktor des Verhältnisses des Brechungsindex des Laserkristalls zum Brechungsindex der Luft vergrößert.

6. Anordnung nach Anspruch 5, **dadurch gekennzeichnet, dass** als anisotroper Laserkristall (1) ein Nd:YVO₄-Kristall verwendet wird.

7. Anordnung nach Anspruch 6, **dadurch gekennzeichnet, dass** zur Erzeugung des asymmetrischen Pumpstrahls (3) ein Diodenlaser (2) mit zeilenförmig angeordneten Einzelemittern und Fast- und Slow-axis-Kollimatoren (7) dient und der Slow-axis-Kollimator aus Einzellinsen besteht, die in einer Ebene der Strahlüberschneidung der von den Einzelemittern ausgesendeten Strahlenbündel angeordnet sind.

8. Anordnung nach Anspruch 7, **dadurch gekennzeichnet, dass** die Pumpstrahlung (3) mittels zweier Zylinderlinsen (4, 5) einem elliptischen Strahlquerschnitt angepasst wird.

9. Anordnung nach Anspruch 6, **dadurch gekennzeichnet, dass** die Pumpstrahlung (3) in der Fast-axis-Richtung eine definierte Divergenz aufweist und eine Fokussierung mit Hilfe einer asphärischen Linse erfolgt.

## Claims

1. An arrangement for pumping an anisotropic laser crystal (1) comprising an asymmetric pump beam (3) whose pump beam cross section has different dimensions perpendicular to one another, and a laser beam cross section which is adapted to this asymmetry; **characterized in that** that axis of the crystallographic axes of the anisotropic laser crystal in whose direction the highest value of the crystal fracture limit exists is oriented along the greatest temperature gradient in the direction of the smaller dimension of the pump beam cross section.

2. The arrangement according to daim 1, **characterized in that** the anisotropic laser crystal (1) having a crystal cross section which is penetrated by the pump beam (3) and which has pairs of oppositely located, parallel crystal edges with edge lengths which differ from one another at least in part of the laser crystal has its largest thermal expansion coefficient in direction of the smaller dimension of the pump beam cross section and parallel to the crystal edge with the shorter edge length.

3. The arrangement according to claim 2, **characterized in that** an asymmetric thermal lens whose strength varies in directions extending perpendicular to one another is formed in the laser crystal (1), the strength of the thermal lens being adapted to the magnitude of the extension of the pump beam cross section.

4. The arrangement according to claim 3, **characterized in that** due to the direction-dependent differences in the strengths of the thermal lens there is a laser beam cross section in the laser crystal (1) whose axial ratio is greater than 1:1 and less than 1:3 in directions extending perpendicular to one another.

5. The arrangement according to daim 4, **characterized in that** the laser crystal (1) has a Brewster surface (12) as beam outlet surface and the axial ratio is increased by the factor of the ratio of the index of refraction of the laser crystal to the index of refraction of air.

6. The arrangement according to claim 5, **characterized in that** an Nd:YVO₄ crystal is used as anisotropic laser crystal (1).

7. The arrangement according to claim 6, **characterized in that** a diode laser (2) with a line-shaped arrangement of individual emitters and fast-axis and stow-axis collimators (7) is used to generate the asymmetric pump beam (3), and the slow-axis collimator consists of individual lenses which are arranged in a plane of the beam intersection of the light beams emitted by the individual emitters.

8. The arrangement according to claim 7, **characterized in that** the pump radiation (3) is adapted to an elliptic beam cross section by means of two cylindrical lenses (4, 5).

9. The arrangement according to claim 6, **characterized in that** the pump radiation (3) has a defined divergence in the fast-axis direction and focusing is carried out by means of an aspheric lens.

## Revendications

1. Dispositif de pompage pour un cristal laser anisotrope (1) comprenant un faisceau de pompage asymétrique (3), dont la section de faisceau de pompage présente différentes dimensions perpendiculaires entre eux; et une section de faisceau laser qui est adaptée à cette asymétrie; **caractérisé en ce que**, parmi les axes cristallographiques du cristal laser anisotrope, cette axe dans la direction de laquelle la valeur plus élevée pour la limite de rupture du cristal existe est orientée selon le gradient de temperature le plus grand dans la direction de la dimension plus petite de la section du faisceau de pompage.

2. Dispositif selon la revendication 1, **caracterisé en ce que** le cristal laser anisotrope (1), qui présente une section de cristal pénétrée par le faisceau de pompage et qui présente des arêtes de cristal opposées parallèlement en paires dont la longueur se distingue au moins dans une partie du cristal laser, a son coéfficient d'expansion thermique le plus grand dans la direction de la dimension plus petite de la section du faisceau de pompage et parallèle à l'arête du cristal qui présente une longueur d'arête inférieure.

3. Dispositif selon la revendication 2, **caractérisé en ce que** dans le cristal laser (1) une lentille thermique asymetrique est formée, dont la puissance est variée selon des directions qui sont perpendiculaires entre eux, la puissance de ladite lentille thermique étant adaptée à la magnitude de l'extension de la section du faisceau de pompage.

4. Dispositif selon la revendication 3, **caracterisé en ce que**, due aux différences en puissance de la lentille thermique qui dépendent de la direction, il y a une section de faisceau laser dans le cristal laser (1) dont la relation axiale est supérieure à 1:1 et inférieure à 1:3 dans des directions qui s'étendent de manière perpendiculaire entre eux

5. Dispositif selon la revendication 4, **caracterisé en ce que** le cristal laser (1) a une surface Brewster (12) servant de face de sortie de faisceau et **en ce que** la relation axiale est augmentée par le facteur de la relation entre l'indice de réfraction du cristal laser et l'indice de réfraction d'air.

6. Dispositif selon la revendication 5, **caracterisé en ce qu'**un cristal Nd:YVO₄ est utilisé comme cristal laser anisotrope (1).

7. Dispositif selon la revendication 6, **caracterisé en ce qu'**un laser à diodes (2) comprenant un arrangement d'émitteurs individuels disposés en lignes et des collimateurs du type fast-axis et slow-axis (7) est utilisé pour générer le faisceau de pompage asymetrique, et **en ce que** le collimateur du type slow-axis consiste de lentilles individuelles disposées dans un plan d'intersection des rayons des faisceaux lumineux émis par les émetteurs individuels.

8. Dispositif selon la revendication 7, **caractérisé en ce que** la radiation de pompage (3) est adaptée à une section de faisceau elliptique par l'intermédiaire de deux lentilles cylindriques (4, 5).

9. Dispositif selon la revendication 6, **caracterisé en ce que** la radiation de pompage (3) présente une divergence définie dans la direction fast-axis et **en ce que** la focalisation est effectuée par l'intermédiaire d'une lentille asphérique.
